# EUROPEAN PATENT SPECIFICATION

(11) **EP 4 337 396 B1**
(45) Date of publication and mention of the grant of the patent: **16.10.2024**
(21) Application number: 22729076.4
(22) Date of filing: 11.05.2022
(51) Int. Cl.: B21D 5/02, B21D 55/00, F16P 3/04, B30B 15/28, G01V 8/12

(54) **BENDING MACHINE, IN PARTICULAR A PRESS BRAKE, WITH A SAFETY SYSTEM**
BIEGEMASCHINE, INSBESONDERE ABKANTPRESSE, MIT SICHERHEITSSYSTEM
MACHINE À PLIER, EN PARTICULIER PRESSE PLIEUSE, DOTÉE D'UN SYSTÈME DE SÉCURITÉ

(30) Priority: 12.05.2021 EP 21173567
(43) Date of publication of application: 20.03.2024
(73) Proprietor: Bystronic Laser AG, 3362 Niederönz (CH)
(72) Inventor: WOIDASKY, Lars, 99867 Gotha (DE); WENIG, Ronny, 99867 Gotha (DE)
(74) Representative: Fink Numrich Patentanwälte PartmbB
(86) International application number: PCT/EP2022/062743
(87) International publication number: WO 2022/238461

(56) References cited:
- EP-A1- 1 663 542
- EP-A2- 0 146 460
- EP-A2- 3 372 319
- EP-B1- 1 663 542
- CN-A- 111 558 666
- JP-A- 2016 198 818
- US-A- 4 527 684

## Description

The invention relates to a bending machine, in particular a press brake having a safety system.

In bending machines, a deformation of a workpiece is achieved by a vertically movable upper beam that presses on the workpiece, which rests on a lower beam located below the upper beam.

It is known from the prior art to provide a safety system consisting of a transmitter and receiver on a bending machine in order to detect the unintentional intrusion of objects or body parts between the upper beam and the lower beam. The transmitter and receiver are positioned at opposite ends laterally under the upper beam and follow the movement of the upper beam. The transmitter emits radiation, such as light, which is detected by the receiver. Due to objects between the transmitter and receiver, less radiation is detected by the receiver. As a consequence, the movement of the upper beam can be stopped.

There is often a need to adjust the vertical height of the transmitter and receiver in the bending machine for such a safety system, e.g., when tools in the bending machine are replaced and this changes the height of the detection area between transmitter and receiver.

Document US 4 527 684 A discloses a bending machine according to the preamble of claim 1.

In the publication EP 3 372 319 A2 a safety system for a bending machine is described, in which the transmitter and the receiver are separately connected to a respective flexible retaining element, which is guided over an adjusting disk. The height of the respective transmitter and receiver can be adjusted via the adjusting disk. This safety system has the disadvantage that separate mechanics are required for the transmitter and receiver to adjust their height.

The publication CN 111558666 A discloses a safety system for a bending machine in which a synchronous height adjustment of a transmitter and a receiver is achieved via a complex and bulky linkage arrangement.

The object of the invention is to provide a safety system in a bending machine that has a simply constructed and space-saving adjustment device for adjusting the height of the transmitter and receiver.

This object is achieved by the bending machine according to patent claim 1. Further developments of the invention are defined in the dependent claims.

The bending machine according to the invention, which is in particular a press brake, includes an upper beam and a lower beam, wherein the upper beam is movable in a working direction of the bending machine relative to the lower beam in order to form a workpiece, in particular a sheet inserted between the upper beam and the lower beam via a front side of the bending machine, by bending along a bending line, which extends in a width direction of the bending machine. The working direction preferably corresponds to a vertical height direction of the bending machine.

Where in the following terms are used in connection with above or below or in relation to a (vertical) height direction, these terms always refer to the vertical top-bottom direction in the operating position of the bending machine, i.e., the position of its intended use.

The bending machine comprises a safety system with a first functional element and a further functional element for monitoring, preferably directly monitoring, a safety area between both functional elements and between the upper beam and the lower beam. Preferably, the first functional element and the further functional element are positioned between the upper beam and the lower beam. Preferably, the first functional element is a transmitter for emitting radiation and the further functional element is a receiver for receiving radiation from the transmitter. The radiation from the transmitter is preferably optical radiation in the visible and possibly also non-visible wavelength range. If necessary, the radiation can also be laser radiation. The safety system is arranged to follow the movement of the upper beam in the working direction. In addition to optically operating functional elements, however, those operating by means of other principles are also conceivable, such as acoustic or ultrasonic sensors, radar sensors, capacitive sensors, etc.

In the bending machine according to the invention, the first functional element and the further functional element are mechanically connected to one another via a flexible tractive force transmission means and an adjustment device for changing the position of the functional elements. Preferably, the first functional element and the further functional element are mechanically connected to one another exclusively via the flexible tractive force transmission means and the adjustment device. A flexible tractive force transmission means is a transmission means that is used exclusively for the transmission of tractive force and is deformable or flexible without any tractive force acting on it.

The adjustment device includes a coupling section movably guided in the working direction, which is (mechanically) coupled to the flexible tractive force transmission means in order to convert a movement of the coupling section into a movement of the flexible tractive force transmission means, which causes a path-identical change in position of the functional elements in the working direction relative to the upper beam. Thus, a common coupling section is provided for the first functional element and the further functional element.

The adjustment device is a manual adjustment device by which the movement of the coupling section is effected via a mechanical application of force by an operator. To do so, the adjustment device comprises a tension-proof adjusting element, such as a strap or rope, having a handle (e.g., a grip). This tension-proof adjusting element is connected in the interior of the bending machine to the coupling section located there, wherein the tension-proof adjusting element extends from the interior of the bending machine through a body part of the bending machine to the handle, the handle being accessible from the exterior of the bending machine. Preferably, the coupling section is movable by increasing and decreasing the tractive force which the operator exerts on the tension-proof adjusting element via the handle. Preferably, the handle is magnetic or has a magnetic element so that the handle adheres to the body part of the bending machine, e.g., the front side of the upper beam, by magnetic force.

The bending machine according to the invention has the advantage that a synchronous change in position of the two functional elements can be achieved simply and in a space-saving manner by means of a common coupling section for the first functional element and the further functional element in combination with a flexible tractive force transmission means.

Due to the adjustment device comprising a tension-proof adjusting element having a handle, a very space-saving and convenient manual adjustment of the position of the functional elements is achieved. Furthermore, the operator cannot be endangered by this embodiment during machine operation. In the event of a possible collision, the handle detaches from the upper beam and eliminates the risk of crushing.

In a preferred embodiment of the bending machine according to the invention, the coupling section and the flexible tractive force transmission means are arranged such that the change in position of the first functional element and the further functional element in the working direction relative to the upper beam is a linear displacement of the first functional element and the further functional element along the working direction. This ensures a space-saving movement of the transmitter and receiver for their position change.

In another preferred embodiment, the flexible tractive force transmission means comprises one or more sections, wherein a first section connects the coupling section to the first functional element and another section connects the coupling section to the further functional element. This creates a particularly simple configuration of the tractive force transmission means. The sections can, for example, be configured as ropes (e.g., wire ropes).

In another preferred embodiment, the flexible tractive force transmission means is guided on the rear side of the upper beam, wherein the rear side faces away from the front side of the bending machine. This ensures that the tractive force transmission means is not located on the operator side of the bending machine, thus avoiding unwanted interference contours and pinch points on the operator side.

In a preferred variant of the embodiment just described, one or more deflection means are provided for guiding the flexible tractive force transmission means, which are arranged on the rear side of the upper beam. Preferably, these deflection means are configured as deflection pulleys. With this variant, a flexible arrangement of the tractive force transmission means on the rear side of the upper beam can be achieved.

In another preferred embodiment, the adjustment device is arranged on the upper beam. For example, the adjustment device can be integrated into the upper beam. Preferably, the coupling section is arranged on the rear side of the upper beam. This allows a compact arrangement of the adjustment device in the bending machine. Nevertheless, it can also be possible to arrange the adjustment device to be laterally offset in the width direction next to the upper beam. In a further embodiment, the adjustment device is covered by a cover so that it is suitably protected during operation of the bending machine.

In a particularly preferred embodiment, the coupling section is linearly movable and preferably movable in the working direction of the bending machine, wherein the linear movement of the coupling section displaces one end of the tractive force transmission means connected to the first functional element offset by the same distance in the working direction as another end of the tractive force transmission means connected to the further functional element. With this embodiment, the change in position of the functional elements is effected in a simple manner via a linear movement of the coupling section.

In another preferred variant, the tension-proof adjusting element is connected to the coupling section located on the rear side of the upper beam, facing away from the front side of the bending machine. The tension-proof adjusting element extends from the rear side of the upper beam through the upper beam and then along the front side of the upper beam opposite the rear side to the handle, wherein the tension-proof adjusting element extends along the front side preferably downward to the handle. The coupling section can be moved by increasing and decreasing the tractive force which the operator exerts on the tension-proof adjusting element via the handle. Preferably, the handle is magnetic or has a magnetic element so that the handle adheres to the front side of the upper beam by magnetic force.

In another preferred embodiment, the manual adjustment device includes locking means that allow the operator to lock the coupling section in a plurality of different positions. The locking means can be released from a locked position by the operator and subsequently locked in a new position by the operator after movement of the coupling section. Depending on the design, the locking can be realised without a grid, e.g., via a clamping mechanism, or it can be designed with a grid, i.e., there is a fixed number of locking positions.

In a preferred variant, the locking means comprises a positioning element, such as a bolt, which can preferably be actuated via the front side of the upper beam, for locking in various defined locking positions of the coupling section. The positioning element is biased into a locking position via a return element. If the positioning element can be actuated via the front side of the upper beam, it preferably does not protrude beyond the front side of the upper beam, thus avoiding interfering contours and pinch points on the front side of the upper beam.

In an embodiment not defined in the claims, instead of a manual adjustment device, an automatic adjustment device can also be provided, which can be actuated by means of an actuator, e.g., hydraulically and/or electromechanically and/or pneumatically. The actuator is preferably controllable by operator actions. This embodiment makes it easier to adjust the position of the functional elements.

In another preferred embodiment, a display means is provided for visualising the position (preferably the height position) of the first functional element and the further functional element in the working direction for an operator. In a simple realisation, the display means is a scale, wherein the position of the functional elements in the working direction is preferably indicated on the scale by an operating element, such as the above handle of the tension-proof adjusting element. Nonetheless, the display means can also include one or more light units or one or more displays.

According to an embodiment not defined in the claims, a safety system for a bending machine is provided. The interactions between the safety system and the bending machine described below are to be understood in such a way that these interactions occur when the safety system is installed in the bending machine, i.e., when the safety system is used or operated in the bending machine as intended. The safety system or its components are thus configured to cause the corresponding interactions when the safety system is installed in the bending machine.

The bending machine for which the safety system is provided includes an upper beam and a lower beam, wherein the upper beam is movable in a working direction of the bending machine relative to the lower beam in order to form a workpiece inserted between the upper beam and the lower beam via a front side of the bending machine, by bending along a bending line, which extends in a width direction of the bending machine.

The safety system comprises a first functional element and a further functional element for monitoring a safety area between both functional elements and between the upper beam and lower beam of the bending machine. When installed in the bending machine, the safety system is arranged to follow the movement of the upper beam in the working direction.

In the safety system, the first functional element and the further functional element are mechanically connected to one another via a flexible tractive force transmission means and an adjustment device for changing the position of the functional elements, wherein the adjustment device comprises a coupling section movably guided in the working direction, which is (mechanically) coupled to the flexible tractive force transmission means in order to convert a movement of the coupling section into a movement of the flexible tractive force transmission means, which causes a path-identical change in position of the functional elements in the working direction relative to the upper beam. The safety system is configured for use in the bending machine according to the invention.

Preferably, the safety system is configured for use in one or more preferred embodiments of the bending machine according to the invention. In other words, the safety system can include the above features described in connection with preferred embodiments of the bending machine according to the invention.

An exemplary embodiment of the invention is described in detail below with reference to the enclosed figures.

In the figures:
- Fig. 1: shows a perspective view of an embodiment of a bending machine according to the invention in the form of a press brake;
- Fig. 2: shows a top view from the front of the bending machine of Fig. 1;
- Fig. 3: shows a perspective view from behind the upper beam of the bending machine of Fig. 1 with the safety system installed there;
- Fig. 4: shows a sectional plan view showing the adjustment device of Fig. 3 in detail; and
- Fig. 5: shows a detailed perspective view, omitting the upper beam, illustrating the mechanism for locking the coupling section.

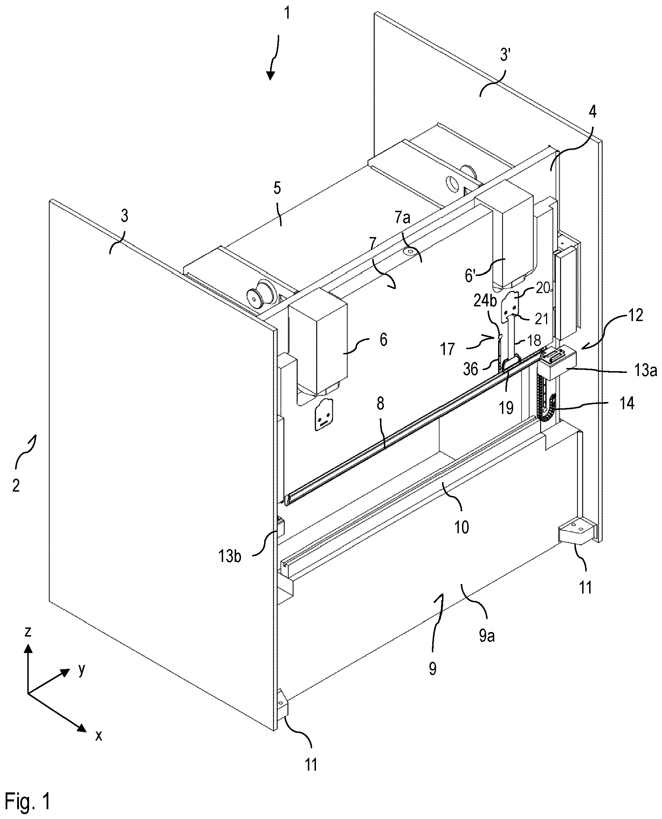

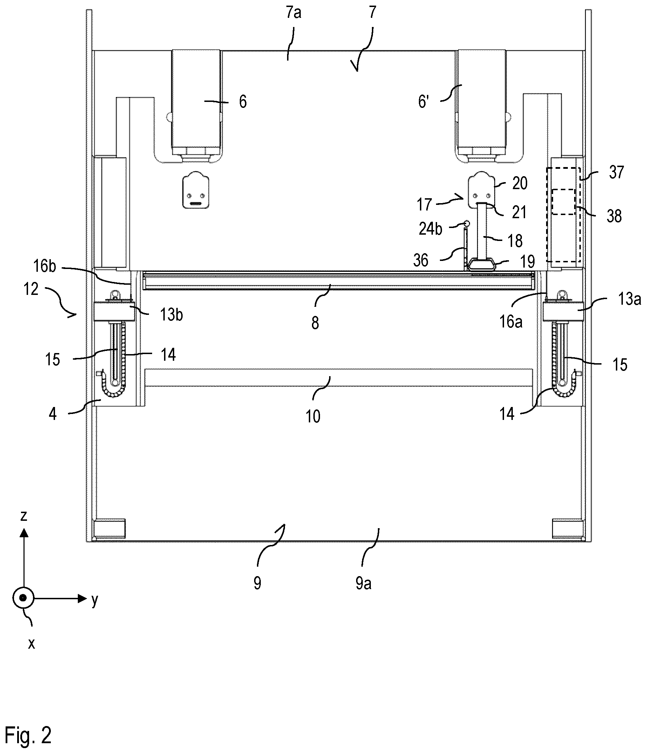

In the following, an embodiment of the invention is described using a bending machine in the form of a press brake. A perspective view of this press brake is shown in Fig. 1, where it is designated by reference symbol 1. In Fig. 1 and also in the other Figures 2 to 5, a spatial coordinate system is shown to describe the directions of the bending machine. The x-direction corresponds to the depth direction of the bending machine and a workpiece to be bent is inserted into the bending machine via its front side in the direction opposite to the x-direction. In contrast, the y-direction is the width direction of the bending machine. Both directions are located in a horizontal plane. The z-direction is the vertical direction and corresponds to the height direction of the bending machine.

The bending machine 1 comprises a frame 2 including, among other things, two side stands 3, 3' and a frame plate 4. An upper beam 7 and a lower beam 9 are provided at the front side of the bending machine. The front side of the upper beam 7 is designated with reference symbol 7a and the front side of the lower beam 9 is designated with reference symbol 9a. On the upper edge of the lower beam 9 there is a tool table 10, on which lower tools are mounted during operation of the bending machine. In contrast, the upper beam 7 comprises a tool receptacle 8 for fastening corresponding upper tools. During operation of the bending machine, a sheet is inserted into the space between the upper beam 7 and the lower beam 9, and the upper beam 7 is then moved downwards so that the upper tools press into the lower tools, thereby deforming the sheet. To ensure a stable stand of the bending machine during a bending process, it is anchored to the floor in its corners using corresponding anchoring means 11.

A hydraulic actuator is used to move the upper beam 7, which is mostly located on the top of a reinforcement plate 5 that extends between the side stands 3 and 3'. In the illustration of Fig. 1, only the two hydraulic cylinders 6 and 6' of the actuator are visible, which are attached to the frame plate 4 and positioned in recesses of the upper beam 7. Corresponding cylinder rods are connected to the upper beam in this region and can cause the upper beam to move in the vertical height direction z.

In order to monitor the space between the upper beam and the lower beam and to detect the unintentional entry of objects into this region, a safety system 12 is provided on the bending machine. This safety system 12 comprises a first functional element, which in the embodiment described here is designed as a transmitter 13a for emitting light, for example in the non-visible infrared range, and a further functional element, which in the embodiment described here is designed as a receiver 13b that detects the light from the transmitter. The first functional element 13a or the transmitter is positioned at the right end of the upper beam 7, whereas the further functional element 13b or the receiver is positioned at the opposite left end of the upper beam 7. Alternatively, the further functional element 13b can be arranged at the right end of the upper beam 7 and the first functional element 13a at the left end of the upper beam. If an object or a human body part unintentionally enters between the upper beam 7 and the lower beam 9, this blocks or reduces the light radiation arriving at the receiver 13b, whereupon the movement of the upper beam 7 stops immediately. This prevents injuries to the human operator, for example when his hand enters between the upper beam and the lower beam.

The first functional element 13a and the further functional element 13b are connected to electrical cables via which they are controlled by means of a control device (not shown) and are also supplied with power. The cables are routed in corresponding energy chains 14 that extend downward from the transmitter or receiver.

The transmitter and receiver follow the vertical movement of the upper beam 7, wherein its relative height position with respect to the upper beam can be adjusted by an adjustment device 17, which is described in more detail below. Of this adjustment device, a tension-proof adjusting element 18 in the form of a band with a handle 19 in the form of a grip located thereon can be seen in Fig. 1. The tension-proof adjusting element extends into a passage 21 of a cover element 20 in the form of a cover plate on the front side 7a of the upper beam 7. In order to prevent the handle 19 from swerving when the upper beam is moved, it is preferably magnetic so that it adheres to the front side 7a of the upper beam 7 by magnetic force.

According to Fig. 1, a display means 36 in the form of a scale is further provided on the front side 7a of the upper beam 7, by means of which the height position of the transmitter and the receiver can be read as the position on the scale at the height of which a corresponding mark is located on the handle 19. Above the display means 36 there is an operating element 24b in the form of an operating knob flush with the front side 7a of the upper beam 7, which is part of the positioning element 24 described further below, which in the embodiment described here is designed as a bolt via which a locking of the adjustment device 17 is effected.

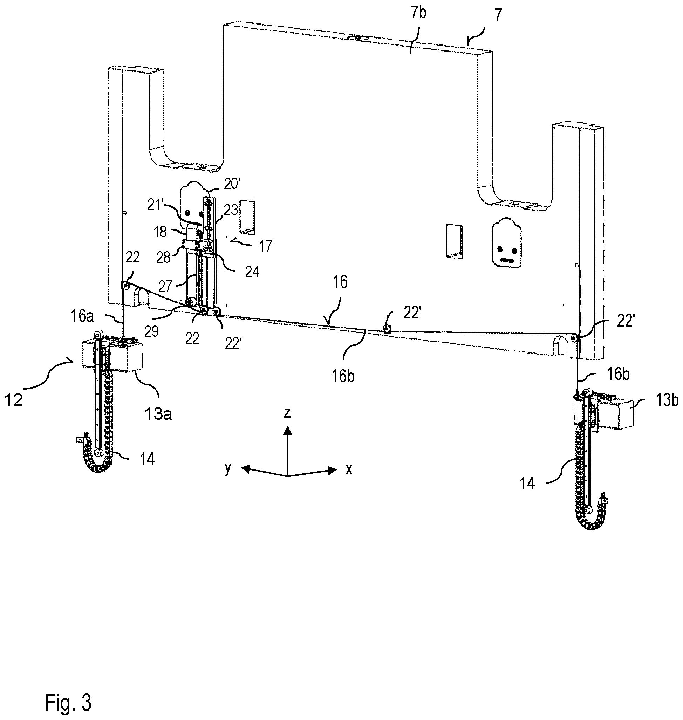

Fig. 2 shows a top view from the front of the bending machine of Fig. 1, from which the mounting of the transmitter and the receiver can be seen more easily. The transmitter, or the first functional element 13a, and the further functional element 13b, or the receiver, are connected to one another via a flexible tractive force transmission means 16 (see Fig. 3). The tractive force transmission means 16 comprises a first section 16a, which in the embodiment described herein is configured as a rope, and a further section 16b, which in the embodiment described herein is also configured as a rope. The ropes are, for example, thin wire ropes with a diameter between 0.5 and 5 mm. The exact structure of the tractive force transmission means 16 is described in more detail below with reference to Fig. 3. The rope forming the first section 16a is connected to the transmitter, whereas the rope forming the further section 16b is coupled to the receiver. These ropes are used to hold the transmitter and receiver in the current height position. The transmitter and receiver are further guided by respective vertically extending guides 15 on the frame plate 4.

In the embodiment described here, the adjustment device 17 is integrated in the upper beam 7. In a modified embodiment, it is also possible for the adjustment device 17 to be arranged to be laterally offset in the width direction y next to the upper beam at its right or left edge and mounted there to the frame plate 4. For example, the adjustment device can be located next to the right edge of the upper beam 7, where it can be covered by a cover 37, if required. This cover is only schematically indicated by a dashed rectangle in Fig. 2.

In the embodiment described here, an adjustment device that can be manually operated by an operator is used to adjust the height position of the transmitter and receiver. Nevertheless, the adjustment device can also include an actuator to operate it, if necessary. By way of example, a corresponding actuator is indicated schematically in Fig. 2 by a dashed square next to the right edge of the upper beam 7 and designated by reference symbol 38.

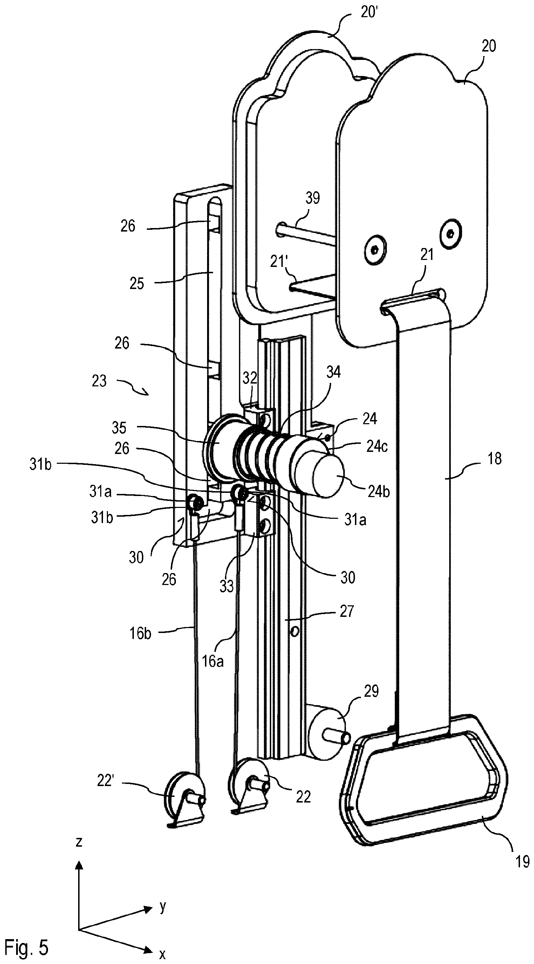

Fig. 3 shows a perspective view of the rear side 7b of the upper beam 7 with the adjustment device 17 integrated thereinto. Fig. 3 shows in particular the guide of the two ropes 16a and 16b of the tractive force transmission means 16. The rope 16a connected to the transmitter 13a, which is shorter than the rope 16b, runs via two deflection means 22 in the form of pulleys to a vertically displaceable coupling section 23, which is part of the adjustment device 17 and is guided in the vertical direction in a guide 27 (see Fig. 5). Similar to the first section/rope 16a, the further section/rope 16b runs over deflection means or deflection pulleys 22', wherein three deflection means are provided due to the greater rope length.

The two upper ends of the ropes are attached to the rear side of the coupling section 23. This can be seen in Fig. 5. There, it can be seen that the upper end of the rope 16b is connected to the coupling section 23 via an interface 30. The interface includes a fastening means 31a in the form of a screw, which attaches a counter fastening means 3 1b in the form of an eyelet attached to the upper end of the further section/rope 16b to the coupling section 23. Similarly, the upper end of the first section/rope 16a is attached to the coupling section 23 via a corresponding interface 30 of fastening means 31a and counter fastening means 31b.

By connecting the two cables to the common coupling section 23, a simultaneous vertical movement of the transmitter and receiver is easily achieved by means of a vertical movement of the coupling section 23. To allow an operator to move the coupling section 23, the tension-proof adjusting element 18 is connected to the coupling section 23 via an interface, which in the embodiment described here is configured as a clamping device 28. In this case, the clamping device 28 consists of two screwed clamping plates which hold the lower end of the tension-proof adjusting element 18 by clamping and are screwed to the coupling section 23. Below the clamping device 28 there is also a path limiting element 29, which is configured as a stop and by which the downward movement of the clamping device 28 and the coupling section 23 connected thereto is delimited.

According to Fig. 3, the tension-proof adjusting element 18 is guided above the clamping device 28 through a passage 21' of a cover element 20' in the form of a cover plate on the rear side 7b of the upper beam 7. The passage 21' corresponds to the corresponding passage 21 on the front side 7a of the upper beam 7. Between these passages, a corresponding opening is formed in the upper beam through which the tension-proof adjusting element 18 runs from the rear to the front side of the upper beam 7.

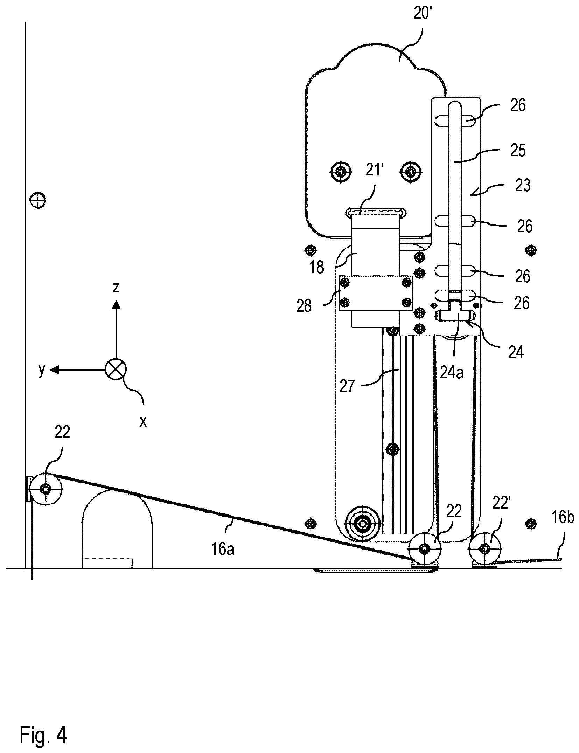

The coupling section 23 can be locked in various vertical positions. For this purpose, the positioning element/bolt 24 is used, which interacts with a detent, which in the embodiment described here is formed by horizontally extending elongated holes 26 of the coupling section 23. The positioning element can be positioned in the horizontally extending elongated holes for locking, as explained in more detail below with reference to Fig. 4. This figure shows a detailed top view of the adjustment device of Fig. 3. In Fig. 4, the positioning element 24 can be seen in particular with its end located at the rear side 7b of the upper beam 7. This end is formed as a T-shaped section 24a with one horizontal leg and one vertical leg. In this regard, the horizontal leg of the T-shaped section 24a can be received in corresponding elongated holes 26 of the coupling section 23, thereby causing the coupling section to be locked in place and thereby adjusting a height position of the transmitter and receiver. The elongated holes extend perpendicular to an elongated guide opening 25 extending vertically, in which the positioning element 24 or the vertical leg of the T-shaped section 24a is guided in the vertical direction in the coupling section 23.

In the position of the coupling section 23 shown in Fig. 4, the horizontal leg of the T-shaped section 24a is located in the lowest of the total of five elongated holes 26, which corresponds to the highest vertical position of the transmitter and receiver. By positioning the horizontal leg of the T-shaped section in another elongated hole 26, the vertical position of the transmitter and receiver is lowered.

The locking and unlocking of the coupling section 23 by means of the positioning element 24 are explained in more detail below with reference to Fig. 5. This figure shows a detailed perspective view of the adjustment device 17 looking at the front side of the upper beam, wherein the upper beam has been omitted to show the components installed therein. In Fig. 5, the horizontal leg of the T-shaped section 24a is located in the third lowest of the five elongated holes 26, whereas in Fig. 4 it is received in the lowest elongated hole. Fig. 5 shows that the tension-proof adjusting element 18 extends through the upper beam between the two passages 21 and 21' of the cover elements 20, 20'. For this purpose, an opening corresponding to the passages 21, 21' is provided in the upper beam. In addition, the two cover elements 20 and 20' are connected to one another by connecting means via corresponding holes in the upper beam. In the embodiment described here, the connecting means are screw bolts by means of which the cover elements are screwed together, wherein one of these screw bolts can be seen in Fig. 5 and is designated with reference symbol 39.

From Fig. 5, it can further be seen that two slide elements 32 and 33 are provided at the rear side of the coupling section 23, which are guided along the guide 27, thereby allowing the coupling section 23 to slide vertically along the guide 27.

According to Fig. 5, the positioning element 24 used for locking has the operating element 24b mentioned above on the front side of the upper beam. The positioning element 24 extends through a corresponding opening in the upper beam and is biased toward the front side of the upper beam by an elastically designed return element 34 in the form of a coil spring. The return element 34 is located between a thickened cylindrical section 24c of the positioning element 24 and a guide bearing 35 in the form of a sleeve in which the positioning element is guided and which is arranged adjacent to the coupling section 23 in the upper beam.

By an operator pressing on the operating element 24b of the positioning element 24, the positioning element 24 is pressed into the upper beam 7 against the elastic force of the return element 34. As a result, the horizontal leg of the T-shaped section 24a moves out of the corresponding elongated hole 26. In this case, the thickness of the horizontal leg is less than the thickness of the vertical leg of the T-shaped section 24a. As soon as the horizontal leg is outside the elongated hole 26, the movement of the coupling section 23 is released. The movement of the coupling section can be controlled by the operator by pulling on the tension-proof adjusting element 18 or releasing the tractive force on the tension-proof adjusting element 18 via the handle 19.

In the following, the operating action of the operator for simultaneous height adjustment of the first functional element/transmitter 13a and the further functional element/receiver 13b is explained. When the operator determines that, for example, due to the installation of new upper or lower tools, the transmitter and receiver are to be arranged in a new height position, he grips the tension-proof adjusting element 18 via the handle 19 and simultaneously presses the operating element 24b of the positioning element 24, thereby releasing the movement of the coupling section 23. First, the operator holds the coupling section 23 in the current height position by pulling on the tension-proof adjusting element 18.

To lower the transmitter and receiver, the operator triggers the vertical downward movement of the coupling section by reducing his pull on the tension-proof adjusting element 18 until the coupling section is in the desired vertical position, which correlates with a corresponding desired height position of the of the functional elements 13a and 13b. Similarly, the operator can initiate a lifting of the transmitter and receiver by pulling on the tension-proof adjusting element 18 and an associated upward vertical movement of the coupling section 23, provided that the horizontal leg of the T-shaped section 24a is not in the lowest elongated hole.

Once the desired height position is reached, this is indicated to the operator by correlation of the marking on the handle 19 with the corresponding height indicated on the display means 36. The horizontal leg of the T-shaped section 24a is then at the level of another elongated hole. The operator then releases the operating element 24b. Thereupon, the horizontal leg of the T-shaped section 24a slides into the new elongated hole and causes the coupling section 23 to be locked in place.

The embodiment of the invention described in the foregoing provides a number of advantages. In particular, simultaneous height adjustment of the transmitter and receiver is provided in a simple manner by a movable coupling section connected to both the transmitter and receiver of a safety system via flexible tractive force transmission means. Through a corresponding design or arrangement of an adjustment device, for example in the form of a coupling section on the rear side of the upper beam in combination with a tension-proof adjusting element on the front side of the upper beam and an operating element flush with the front side, interference contours or pinch points on the front side of the upper beam are prevented.

### List of reference symbols

- 1: Bending machine
- 2: Frame
- 3, 3': Side stand
- 4: Frame plate
- 5: Reinforcement plate
- 6, 6': Hydraulic cylinder
- 7: Upper beam
- 7a: Front side of the upper beam
- 8: Tool receptacle
- 9: Lower beam
- 9a: Front side of the lower beam
- 10: Tool holder
- 11: Anchoring means
- 12: Safety system
- 13a: First functional element (e.g., transmitter)
- 13b: Further functional element (e.g., receiver)
- 14: Energy chains
- 15: Guides
- 16: Tractive force transmission means
- 16a: First section (of 16) (e.g., rope)
- 16b: Further section (of 16) (e.g., rope)
- 17: Adjustment device
- 18: Tension-proof adjusting element
- 19: Handle
- 20, 20': Cover element
- 21, 21': Passage
- 22, 22': Deflection means
- 23: Coupling section of 17 (configured as a motion link)
- 24: Positioning element (for 17) (e.g., bolt)
- 24a: T-shaped section of the positioning element
- 24b: Operating element on 24
- 24c: Thickened cylindrical section on 24b
- 25: Elongated guide opening on 23
- 26: Detent on 23 (e.g., horizontal elongated holes)
- 27: Guide
- 28: Interface between adjustment device and positioning element (configured as a clamping device)
- 29: Path limiting element for 23 (configured as a stop)
- 30: Interfaces of 16 (16a and 16b on 23)
- 31a: Fastening means (here screw) of 30
- 31b: Counter fastening means (here eyelet) of 30
- 32, 33: Slide element on 23 guided at 27
- 34: (Elastically configured) return element
- 35: Guide bearing (configured as a sleeve)
- 36: Display means
- 37: Cover
- 38: Actuator
- 39: Connecting means (configured as screw bolts)

## Claims

1. A bending machine, in particular a press brake, having an upper beam (7) and a lower beam (9), wherein the upper beam (7) is movable in a working direction (z) of the bending machine (1) relative to the lower beam (9), in order to form a workpiece, which is inserted between the upper beam (7) and the lower beam (9) via a front side of the bending machine (1), by bending along a bending line, which extends in a width direction (y) of the bending machine (1), the bending machine (1) including a safety system (12) having a first functional element (13a) and a further functional element (13b) for monitoring a safety area between both functional elements (13a, 13b) and between the upper beam (7) and the lower beam (9), the safety system being arranged to follow the movement of the upper beam (7) in the working direction (z), wherein the first functional element (13a) and the further functional element (13b) are mechanically connected to one another via a flexible tractive force transmission means (16) and an adjustment device (17) for changing the position of the functional elements (13a, 13b), wherein the adjustment device (17) includes a coupling section (23) movably guided in the working direction (z), coupled to the flexible tractive force transmission means (16) in order to convert a movement of the coupling section (23) into a movement of the flexible tractive force transmission means (16), which causes a path-identical change in position of the functional elements (13a, 13b) in the working direction (z) relative to the upper beam (7),
**characterized in that**
the adjustment device (17) is a manual adjustment device by which the movement of the coupling section (23) is effected via a mechanical application of force by an operator, where the adjustment device (17) comprises a tension-proof adjusting element (18) having a handle (19), which is connected in the interior of the bending machine (1) to the coupling section (23) located there, wherein the tension-proof adjusting element (18) extends from the interior of the bending machine (1) through a body part of the bending machine (1) to the handle (19), the handle (19) being accessible from the exterior of the bending machine.

2. The bending machine according to claim 1, **characterised in that** the coupling section (23) and the flexible tractive force transmission means (16) are arranged such that the change in position of the first functional element (13a) and the further functional element (13b) in the working direction (z) relative to the upper beam (7) is a linear displacement of the first functional element (13a) and the further functional element (13b) along the working direction (z).

3. The bending machine according to claim 1 or 2, **characterised in that** the flexible tractive force transmission means (16) comprises one or more sections (16a, 16b), wherein a first section (16a) connects the coupling section (23) to the first functional element (13a) and another section (16b) connects the coupling section (23) to the further functional element (13b).

4. The bending machine according to any one of the preceding claims, **characterised in that** the flexible tractive force transmission means (16) is guided on the rear side (7b) of the upper beam (7) facing away from the front side of the bending machine (1).

5. The bending machine according to claim 4, **characterised in that** for guiding the flexible tractive force transmission means (16), one or more deflection means (22, 22') are provided, which are arranged on the rear side (7b) of the upper beam (7).

6. The bending machine according to any one of the preceding claims, **characterised in that** the adjustment device (17) is arranged on the upper beam (7), wherein the coupling section (23) is preferably arranged on the rear side (7b) of the upper beam (7), or that the adjustment device (17) is arranged to be laterally offset in the width direction (y) next to the upper beam (7), wherein the adjustment device (17) is preferably covered by a cover (37).

7. The bending machine according to any one of the preceding claims, **characterised in that** the coupling section (23) is linearly movable and preferably movable in the working direction (z) of the bending machine (1), wherein the linear movement of the coupling section (23) displaces one end of the tractive force transmission means (16) connected to the first functional element (13a) offset by the same distance in the working direction (z) as another end of the tractive force transmission means (16) connected to the further functional element (13b).

8. The bending machine according to one of the preceding claims, **characterised in that** the coupling section (23) is movable by increasing and decreasing the tractive force which the operator exerts on the tension-proof adjusting element (18) via the handle (19).

9. The bending machine according to one of claims 1 to 7, **characterised in that** the tension-proof adjusting element (18) is connected on the rear side (7b) of the upper beam (7) to the coupling section (23) located there, wherein the tension-proof adjusting element (18) extends from the rear side (7b) of the upper beam (7) through the upper beam (7) and then along the front side (7a) of the upper beam (7) opposite the rear side (7b) to the handle (19), wherein the coupling section (23) is movable by increasing and decreasing the tractive force which the operator exerts on the tension-proof adjusting element (18) via the handle (19).

10. The bending machine according to one of the preceding claims, **characterised in that** the adjustment device (17) comprises a locking means (24, 26, 34) by which the operator can lock the coupling section (23) in a plurality of different positions, wherein the locking means (24, 26, 34) can be released from a locked position by the operator and subsequently locked in a new position by the operator after movement of the coupling section (23).

11. The bending machine according to claim 10, **characterised in that** the locking means (24, 26, 34) comprises a positioning element (24), preferably operable via the front side (7a) of the upper beam (7), for locking in various defined locking positions of the coupling section (23), wherein the positioning element (24) is biased into a locking position via a return element (34).

12. The bending machine according to any one of the preceding claims, **characterised in that** a display means (36) is provided for visualising the position of the first functional element (13a) and the further functional element (13b) in the working direction.

## Patentansprüche

1. Biegemaschine, insbesondere Abkantpresse, die eine Oberwange (7) und eine Unterwange (9) aufweist, wobei die Oberwange (7) im Verhältnis zur Unterwange (9) in einer Arbeitsrichtung (z) der Biegemaschine (1) beweglich ist, um ein über eine Vorderseite der Biegemaschine (1) zwischen die Oberwange (7) und die Unterwange (9) eingelegtes Werkstück durch Biegen entlang einer Biegelinie zu formen, die sich in einer Breitenrichtung (y) der Biegemaschine (1) erstreckt, wobei die Biegemaschine (1) ein Sicherheitssystem (12) einschließt, das ein erstes Funktionselement (13a) und ein weiteres Funktionselement (13b) zum Überwachen eines Sicherheitsbereichs zwischen beiden Funktionselementen (13a, 13b) und zwischen der Oberwange (7) und der Unterwange (9) aufweist, wobei das Sicherheitssystem angeordnet ist, um der Bewegung der Oberwange (7) in der Arbeitsrichtung (z) zu folgen, wobei das erste Funktionselement (13a) und das weitere Funktionselement (13b) über ein flexibles Zugkraftübertragungsmittel (16) und eine Verstelleinrichtung (17) zum Ändern der Position der Funktionselemente (13a, 13b) mechanisch miteinander verbunden sind, wobei die Verstelleinrichtung (17) einen in Arbeitsrichtung (z) beweglich geführten Koppelabschnitt (23) einschließt, der mit dem flexiblen Zugkraftübertragungsmittel (16) gekoppelt ist, um eine Bewegung des Koppelabschnitts (23) in eine Bewegung des flexiblen Zugkraftübertragungsmittels (16) umzusetzen, die eine wegidentische Positionsveränderung der Funktionselemente (13a, 13b) in Arbeitsrichtung (z) im Verhältnis zur Oberwange (7) bewirkt,
**dadurch gekennzeichnet, dass**
die Verstelleinrichtung (17) eine manuelle Verstelleinrichtung ist, durch die die Bewegung des Koppelabschnitts (23) über eine mechanische Kraftanwendung durch einen Bediener herbeigeführt wird, wobei die Verstelleinrichtung (17) ein zugfestes Verstellelement (18) umfasst, das einen Griff (19) aufweist, das im Inneren der Biegemaschine (1) mit dem dort befindlichen Koppelabschnitt (23) verbunden ist, wobei sich das zugfeste Verstellelement (18) vom Inneren der Biegemaschine (1) durch ein Körperteil der Biegemaschine (1) bis zum Griff (19) erstreckt, wobei der Griff (19) von der Außenseite der Biegemaschine aus zugänglich ist.

2. Biegemaschine nach Anspruch 1, **dadurch gekennzeichnet, dass** der Koppelabschnitt (23) und das flexible Zugkraftübertragungsmittel (16) derart angeordnet sind, dass die Positionsänderung des ersten Funktionselements (13a) und des weiteren Funktionselements (13b) in Arbeitsrichtung (z) im Verhältnis zur Oberwange (7) eine lineare Verschiebung des ersten Funktionselements (13a) und des weiteren Funktionselements (13b) entlang der Arbeitsrichtung (z) ist.

3. Biegemaschine nach Anspruch 1 oder 2, **dadurch gekennzeichnet, dass** das flexible Zugkraftübertragungsmittel (16) einen oder mehrere Abschnitte (16a, 16b) aufweist, wobei ein erster Abschnitt (16a) den Koppelabschnitt (23) mit dem ersten Funktionselement (13a) verbindet und ein weiterer Abschnitt (16b) den Koppelabschnitt (23) mit dem weiteren Funktionselement (13b) verbindet.

4. Biegemaschine nach einem der vorhergehenden Ansprüche, **dadurch gekennzeichnet, dass** das flexible Zugkraftübertragungsmittel (16) an der von der Vorderseite der Biegemaschine (1) abgewandten Rückseite (7b) der Oberwange (7) geführt ist.

5. Biegemaschine nach Anspruch 4, **dadurch gekennzeichnet, dass** zum Führen des flexiblen Zugkraftübertragungsmittels (16) ein oder mehrere Umlenkmittel (22, 22') bereitgestellt sind, die an der Rückseite (7b) der Oberwange (7) angeordnet sind.

6. Biegemaschine nach einem der vorhergehenden Ansprüche, **dadurch gekennzeichnet, dass** die Verstelleinrichtung (17) an der Oberwange (7) angeordnet ist, wobei der Koppelabschnitt (23) vorzugsweise an der Rückseite (7b) der Oberwange (7) angeordnet ist oder dass die Verstelleinrichtung (17) in Breitenrichtung (y) seitlich versetzt neben der Oberwange (7) angeordnet ist, wobei die Verstelleinrichtung (17) vorzugsweise durch eine Abdeckung (37) abgedeckt ist.

7. Biegemaschine nach einem der vorhergehenden Ansprüche, **dadurch gekennzeichnet, dass** der Koppelabschnitt (23) linear beweglich und vorzugsweise in Arbeitsrichtung (z) der Biegemaschine (1) beweglich ist, wobei die Linearbewegung des Koppelabschnitts (23) ein mit dem ersten Funktionselement (13a) verbundenes Ende des Zugkraftübertragungsmittels (16) um die gleiche Distanz in Arbeitsrichtung (z) versetzt verschiebt wie ein weiteres mit dem weiteren Funktionselement (13b) verbundenes Ende des Zugkraftübertragungsmittels (16).

8. Biegemaschine nach einem der vorhergehenden Ansprüche, **dadurch gekennzeichnet, dass** der Koppelabschnitt (23) durch Erhöhen und Verringern der Zugkraft beweglich ist, die der Bediener über den Griff (19) auf das zugfeste Verstellelement (18) ausübt.

9. Biegemaschine nach einem der Ansprüche 1 bis 7, **dadurch gekennzeichnet, dass** das zugfeste Verstellelement (18) an der Rückseite (7b) der Oberwange (7) mit dem dort befindlichen Koppelabschnitt (23) verbunden ist, wobei sich das zugfeste Verstellelement (18) von der Rückseite (7b) der Oberwange (7) durch die Oberwange (7) hindurch und dann entlang der der Rückseite (7b) gegenüberliegenden Vorderseite (7a) der Oberwange (7) bis zum Griff (19) erstreckt, wobei der Koppelabschnitt (23) durch Erhöhen und Verringern der Zugkraft beweglich ist, die der Bediener über den Griff (19) auf das zugfeste Verstellelement (18) ausübt.

10. Biegemaschine nach einem der vorhergehenden Ansprüche, **dadurch gekennzeichnet, dass** die Verstelleinrichtung (17) ein Arretiermittel (24, 26, 34) umfasst, mit dessen Hilfe der Bediener den Koppelabschnitt (23) in einer Vielzahl von unterschiedlichen Positionen arretieren kann, wobei das Arretiermittel (24, 26, 34) durch den Bediener aus einer arretierten Stellung gelöst und anschließend nach einem Bewegen des Koppelabschnitts (23) durch den Bediener in einer neuen Stellung arretiert werden kann.

11. Biegemaschine nach Anspruch 10, **dadurch gekennzeichnet, dass** das Arretiermittel (24, 26, 34) ein vorzugsweise über die Vorderseite (7a) der Oberwange (7) bedienbares Positionierelement (24) zum Arretieren des Koppelabschnitts (23) in verschiedenen definierten Arretierpositionen umfasst, wobei das Positionierelement (24) über ein Rückstellelement (34) in eine Arretierposition vorgespannt ist.

12. Biegemaschine nach einem der vorhergehenden Ansprüche, **dadurch gekennzeichnet, dass** ein Anzeigemittel (36) zum Visualisieren der Position des ersten Funktionselements (13a) und des weiteren Funktionselements (13b) in Arbeitsrichtung bereitgestellt ist.

## Revendications

1. Machine à plier, en particulier presse plieuse, comportant une poutre supérieure (7) et une poutre inférieure (9), dans laquelle la poutre supérieure (7) est mobile dans une direction de travail (z) de la machine à plier (1) par rapport à la poutre inférieure (9), afin de former une pièce à usiner, qui est insérée entre la poutre supérieure (7) et la poutre inférieure (9) via un côté avant de la machine à plier (1), par pliage le long d'une ligne de pliage, qui s'étend dans une direction de largeur (y) de la machine à plier (1), la machine à plier (1) comprenant un système de sécurité (12) ayant un premier élément fonctionnel (13a) et un autre élément fonctionnel (13b) pour surveiller une zone de sécurité entre les deux éléments fonctionnels (13a, 13b) et entre la poutre supérieure (7) et la poutre inférieure (9), le système de sécurité étant agencé pour suivre le mouvement de la poutre supérieure (7) dans la direction de travail (z), dans laquelle le premier élément fonctionnel (13a) et l'autre élément fonctionnel (13b) sont reliés mécaniquement l'un à l'autre via un moyen de transmission de force de traction flexible (16) et un dispositif de réglage (17) pour modifier la position des éléments fonctionnels (13a, 13b), dans laquelle le dispositif de réglage (17) comprend une section d'accouplement (23) guidée de manière mobile dans la direction de travail (z), couplée au moyen de transmission de force de traction flexible (16) afin de convertir un mouvement de la section d'accouplement (23) en un mouvement du moyen de transmission de force de traction flexible (16), qui provoque un changement de position identique à la trajectoire des éléments fonctionnels (13a, 13b) dans la direction de travail (z) par rapport à la poutre supérieure (7),
**caractérisée en ce que**
le dispositif de réglage (17) est un dispositif de réglage manuel grâce auquel le mouvement de la section d'accouplement (23) est effectué via une application mécanique d'une force par un opérateur, le dispositif de réglage (17) comprenant un élément de réglage résistant à la traction (18) comportant une poignée (19) qui est reliée à l'intérieur de la machine à plier (1) à la section d'accouplement (23) qui s'y trouve, l'élément de réglage résistant à la traction (18) s'étendant depuis l'intérieur de la machine à plier (1) à travers une partie du corps de la machine à plier (1) jusqu'à la poignée (19), la poignée (19) étant accessible depuis l'extérieur de la machine à plier.

2. Machine à plier selon la revendication 1, **caractérisée en ce que** la section d'accouplement (23) et le moyen de transmission de force de traction flexible (16) sont disposés de telle sorte que le changement de position du premier élément fonctionnel (13a) et de l'autre élément fonctionnel (13b) dans la direction de travail (z) par rapport à la poutre supérieure (7) est un déplacement linéaire du premier élément fonctionnel (13a) et de l'autre élément fonctionnel (13b) le long de la direction de travail (z).

3. Machine à plier selon la revendication 1 ou 2, **caractérisée en ce que** le moyen de transmission de force de traction flexible (16) comprend une ou plusieurs sections (16a, 16b), dans laquelle une première section (16a) relie la section d'accouplement (23) au premier élément fonctionnel (13a) et une autre section (16b) relie la section d'accouplement (23) à l'autre élément fonctionnel (13b).

4. Machine à plier selon l'une quelconque des revendications précédentes, **caractérisée en ce que** le moyen de transmission de force de traction flexible (16) est guidé sur le côté arrière (7b) de la poutre supérieure (7) opposé au côté avant de la machine à plier (1).

5. Machine à plier selon la revendication 4, **caractérisée en ce que** pour guider le moyen de transmission de force de traction flexible (16), il est prévu un ou plusieurs moyens de déviation (22, 22'), qui sont disposés sur le côté arrière (7b) de la poutre supérieure (7).

6. Machine à plier selon l'une quelconque des revendications précédentes, **caractérisée en ce que** le dispositif de réglage (17) est disposé sur la poutre supérieure (7), la section d'accouplement (23) étant de préférence disposée sur le côté arrière (7b) de la poutre supérieure (7), ou **en ce que** le dispositif de réglage (17) est disposé de manière à être décalé latéralement dans la direction de largeur (y) à côté de la poutre supérieure (7), le dispositif de réglage (17) étant de préférence recouvert par un couvercle (37).

7. Machine à plier selon l'une quelconque des revendications précédentes, **caractérisée en ce que** la section d'accouplement (23) est mobile linéairement et de préférence mobile dans la direction de travail (z) de la machine à plier (1), le mouvement linéaire de la section d'accouplement (23) déplaçant une extrémité du moyen de transmission de force de traction (16) reliée au premier élément fonctionnel (13a) décalée de la même distance dans la direction de travail (z) qu'une autre extrémité du moyen de transmission de force de traction (16) reliée à l'autre élément fonctionnel (13b).

8. Machine à plier selon l'une quelconque des revendications précédentes, **caractérisée en ce que** la section d'accouplement (23) est mobile en augmentant et en diminuant la force de traction que l'opérateur exerce sur l'élément de réglage résistant à la traction (18) via la poignée (19).

9. Machine à plier selon l'une quelconque des revendications 1 à 7, **caractérisée en ce que** l'élément de réglage résistant à la traction (18) est relié sur le côté arrière (7b) de la poutre supérieure (7) à la section d'accouplement (23) qui s'y trouve, dans laquelle l'élément de réglage résistant à la traction (18) s'étend depuis le côté arrière (7b) de la poutre supérieure (7) à travers la poutre supérieure (7), puis le long du côté avant (7a) de la poutre supérieure (7) opposé au côté arrière (7b) jusqu'à la poignée (19), la section d'accouplement (23) étant mobile en augmentant et en diminuant la force de traction que l'opérateur exerce sur l'élément de réglage résistant à la traction (18) via la poignée (19).

10. Machine à plier selon l'une quelconque des revendications précédentes, **caractérisée en ce que** le dispositif de réglage (17) comprend un moyen de verrouillage (24, 26, 34) grâce auquel l'opérateur peut verrouiller la section d'accouplement (23) dans plusieurs positions différentes, dans laquelle le moyen de verrouillage (24, 26, 34) peut être libéré d'une position verrouillée par l'opérateur et ensuite verrouillé dans une nouvelle position par l'opérateur après le mouvement de la section d'accouplement (23).

11. Machine à plier selon la revendication 10, **caractérisée en ce que** le moyen de verrouillage (24, 26, 34) comprend un élément de positionnement (24), de préférence actionnable via le côté avant (7a) de la poutre supérieure (7), pour le verrouillage dans diverses positions de verrouillage définies de la section d'accouplement (23), dans laquelle l'élément de positionnement (24) est sollicité dans une position de verrouillage par l'intermédiaire d'un élément de rappel (34).

12. Machine à plier selon l'une quelconque des revendications précédentes, **caractérisée en ce qu'**un moyen d'affichage (36) est prévu pour visualiser la position du premier élément fonctionnel (13a) et de l'autre élément fonctionnel (13b) dans la direction de travail.
